# EUROPEAN PATENT APPLICATION

(11) **EP 1 528 298 A1**
(43) Date of publication of application: **04.05.2005**
(21) Application number: 03025323.1
(22) Date of filing: 03.11.2003
(51) Int. Cl.: F16H 61/32

(54) **Shift control mechanism for a synchromesh-type transmission**

(71) Applicant: AISIN AI Co., Ltd., Nishio-shi, Aichi-ken (JP); TOYOTA JIDOSHA KABUSHIKI KAISHA, Toyota-shi, Aichi-ken 471-8571 (JP)
(72) Inventor: Ueda, Yukio, Toyoake-shi, Aichi-ken (JP); Kano, Tomoyuki, Toyota-shi, Aichi-ken (JP); Ohi, Takao, Okazaki-shi, Aichi-ken (JP); Ogawa, Thinari, Nagoya-shi, Aichi-ken (JP)
(74) Representative: SERJEANTS

(57) **Abstract**

A shift control mechanism is provided for an automated manual transmission. The transmission may be a synchromesh-type transmission including a idle gear, a synchronizer hub, a sleeve and a gear selection main shaft (30). A synchromesh mechanism is provided for synchronizing the sleeve and the idle gear. The shift control mechanism comprises a sliding actuator (S) for slidably moving the shift and select main shaft and a rotary actuator (R) for rotating the shift and select main shaft. According to the invention the rotary actuator (R) comprises a rotary actuator driving motor (20), a pinion gear (22) provided at a tip end portion of an output shaft of the rotary actuator driving motor (20), and a driven gear (39) provided substantially coaxially with the shift and select main shaft in driving engagement with the pinion gear (22), wherein the rotating force of the rotary actuator driving motor (20) is transmitted through the pinion gear (22) and driven gear (39) to the shift and select main shaft (30).

## Description

### FIELD OF THE INVENTION

This invention generally relates to a shift control mechanism for a synchromesh-type transmission.

### BACKGROUND OF THE INVENTION

In general, a vehicle - e.g., an automobile, a bus or a tracked vehicle, which is driven by an engine and/or a motor, is provided with a transmission for obtaining optimal vehicle speed and driving force in response to vehicle driving conditions. The transmission may be, for example, an AT - i.e., an automatic transmission, a CVT - i.e., a continuously variable transmission, an MT - i.e., a manual transmission.

Known manual transmissions are provided with a counter shaft (an input shaft), a main shaft (an output shaft), plural counter gears fixedly disposed on the counter shaft, plural idle gears idly disposed on the main shaft, and a synchromesh mechanism. The counter shaft is configured to transmit input rotation from, for example a crankshaft of the engine to the main shaft. The main shaft is configured to transmit output rotation of the transmission to a propeller shaft. The idle gears are idly rotated around the main shaft and are always in an engaged condition with the corresponding counter gears. The synchromesh mechanism includes synchronizer hubs rotatable integrally with the main shaft, and sleeves engageable with splines defined at respective outer peripheries of the synchronizer hubs, in which the sleeves can be slidably moved in an axial direction of the main shaft. A sleeve being engaged with the splines of the corresponding synchronizer hub can be selectively moved in the axial direction in response to a driver's intention. When the selected sleeve is spline-engaged with a desired idle gear and the selected sleeve is synchronizingly rotated with the desired idle gear, a desired shift stage can be established in the manual transmission, i.e. a desired speed change can be performed therein.

In vehicles provided with the above-described manual transmission, the driver needs to manually perform clutch and shift operations. Therefore, a desired speed change can be performed in response to the driver's operation of a floor shift lever - i.e., a shift lever disposed in the vicinity of a vehicle floor, or a column shift lever - i.e., a shift lever disposed in the vicinity of a steering wheel.

The shift lever operation is transmitted to a shift fork fixed to the corresponding sleeve via a shift and select main shaft- e.g., a shift and select shaft. A desired sleeve can be hence selected and moved in response to the movement of the main shaft for shift operation. At this point, the input rotation and the output rotation are synchronized via the synchromesh mechanism such that a desired speed change can be performed.

Somewhat recent developments have led to a transmission which is structurally based upon the manual transmission and performs the speed change by use of an actuator including a driving source such as a hydraulic pressure type driving source, an air pressure type driving source, and an electric driving source. Hereinafter, this type of transmission is referred to as an automated manual transmission. In this type of automated manual transmission, the actuator is controlled by a computer such as an electronic control unit, and is able to perform a fully automated speed change in response to vehicle driving conditions or a semi-automated speed change based upon the driver's intention.

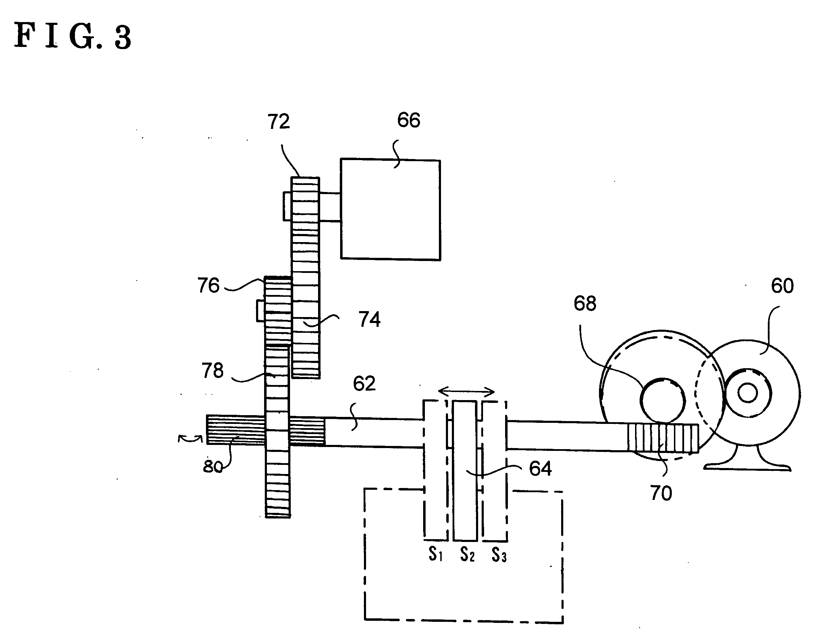

For example, Japanese Patent Publication published as No. 1993-32627 discloses a shift control device for the above-described automated manual transmission. As illustrated in FIG. 3 herein, a select motor 60 slidably moves an output shaft 62, which is a shift and select main shaft, thereby selecting a sleeve S₁, S₂ or S₃ via a lever 64 fixed to the output shaft 62. The output shaft 62 is rotated by a shift motor 66, thereby moving the selected sleeve. More particularly, the sliding movement of the output shaft 62 is performed by use of a select pinion gear 68 driven by the select motor 60 and a rack 70 axially moved in response to rotation of the pinion gear 68. The rotation of the output shaft 62 is performed by use of a gear assembly which includes a shift pinion gear 72 driven by the shift motor 66, a driven gear 74 engaged with the shift pinion gear 72, an intermediate gear 76 rotated integrally with the driven gear 74, and an output shaft driving gear 78 engaged with the intermediate gear 76 and splined at 80 to the output shaft 62.

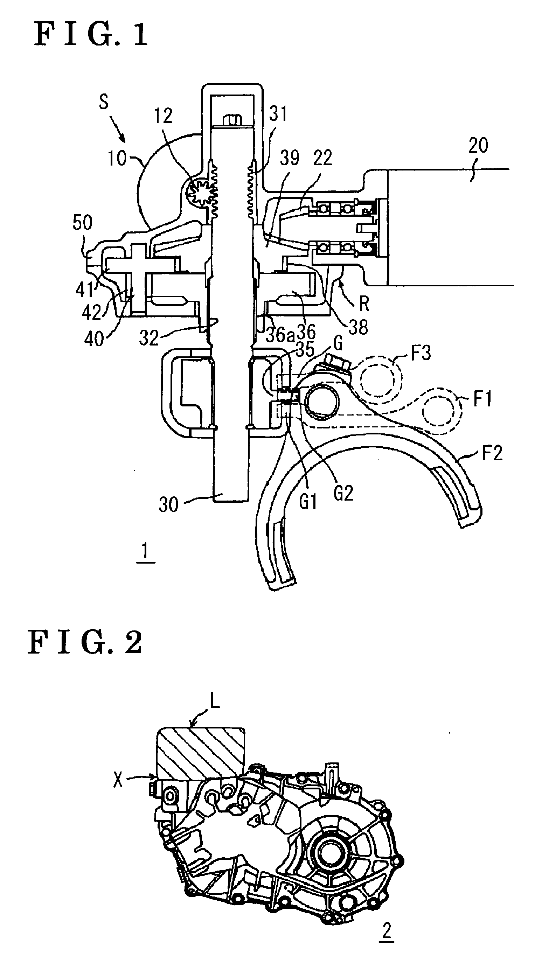

However, in a shift control device with the above-described structure, an output shaft rotating mechanism including the shift motor 66 and the gear assembly 72 to 78 may be extended in one dimension, making it difficult or impossible to downsize the shift control device. For example, when the shift control device illustrated in FIG. 3 is applied to a manual transmission mounted on a front engine front wheel driving type vehicle - i.e., an FF type vehicle which generally requires a compact transmission housing case as illustrated in FIG. 2, a mounting position of the manual transmission may have to be changed or the manual transmission may be required to be enlarged. In this case, the shift control device illustrated in FIG. 3 may not be suitable for installation in a conventional synchromesh-type transmission.

Accordingly, a need exists for providing a more compact shift control device for a synchromesh-type transmission.

### SUMMARY OF THE INVENTION

The invention provides a shift control mechanism having the characteristics of claim 1 herein. Taking the drive from the rotary actuator motor directly from the gear on the output shaft of the rotary actuator motor to the driven gear mounted substantially coaxially relative to the shift and select main shaft enables the entire gear train driven by the rotary actuator motor to be rearranged in a much more compact fashion, and permits downsizing of the shift control mechanism to fit within a compact transmission housing case of an FF type vehicle.

### (1) Rotary Actuator

The shift and select main shaft can be rotated directly by the driven gear which is engaged with the gear on the output shaft of the rotary actuator motor and thus driven for rotation by the driving motor (for example a shift motor). This simple structure may effectively lead to the downsizing of a shift control mechanism for a transmission. It is preferable, however, that the gear train from the shift motor comprises a first intermediate driving gear rotated integrally with the driven gear, a first intermediate driven gear supported by an intermediate shaft being different from the shift and select main shaft and engaged with the first intermediate driving gear, a second intermediate driving gear rotated integrally with the first intermediate driven gear, and a main shaft driving gear disposed substantially coaxially with the shift and select main shaft, engaged with the second intermediate driving gear, and drivingly connected to the shift and select main shaft for example by a spline connection.

As described above, the shift control mechanism may be provided with plural intermediate gears, by which an appropriate speed reduction gear ratio can be designed using various combinations of gears. It is however the positioning of the driven gear, being the gear that is driven directly by the gear on the output shaft of the rotary actuator motor (e.g. the shift motor), substantially coaxially with the shift and select main shaft that enables the shift control mechanism to be downsized.

It is preferable that the first intermediate driving gear possesses fewer teeth than the driven gear, and the second intermediate driving gear possesses fewer teeth than the first intermediate driven gear. In this case, not only can the rotating mechanism be downsized, but also the speed reduction ratio can be increased. Therefore, a relatively large rotating force can be applied to the shift and select main shaft even if a small-sized driving motor is applied for rotating the shift and select main shaft.

### (2) Sliding Actuator

The shift and select main shaft can be moved in the axial direction by use of a ball screw. However, the sliding actuator can be simply structured by use of a second pinion gear and a rack, thereby leading to downsize. That is, the sliding actuator may be a driving motor (for example a select motor) for slidable movement of the shift and select main shaft, a second pinion gear on an output shaft of the driving motor, and a rack on the shift and select main shaft. The rack is engaged with the second pinion gear and slidably moves the shift and select main shaft axially in response to rotation of the second pinion gear.

### (3) The Gear Train of the Rotary Actuator

The gear on the output shaft of the rotary actuator motor and the driven gear can be spur gears but are preferably bevel gears, in which case, the select motor and the shift motor can be arranged substantially at right angles to the shift and select main shaft. Therefore, when the shift control mechanism is installed in a synchromesh-type transmission, the driving motors do not have to project through a mounting surface, thereby making the shift control mechanism even more suitable for installation in a synchromesh-type transmission. The driven gear does not have to possess a fully ring-shaped structure. Further, it can be provided with the only a sufficient number of teeth corresponding to the desired rotating angle of the shift and select main shaft. The gear on the output shaft of the rotary actuator motor and the driven gear can be skew gears such as hypoid gears or worm gears.

### (4) Others

As described above, the sliding actuator operates for slidably moving the shift and select main shaft in the axial direction, and the rotating actuator operates for rotating the shift and select main shaft. However, the present invention is not only limited to the description, and other alternatives can be applied. For example, the rotating actuator can be applied as a shift actuator for moving the sleeve by rotating the shift and select main shaft. Alternatively, the rotating actuator can be applied as a select actuator for selecting the sleeve by slidably moving the shift and select main shaft in the axial direction. In the same manner, the sliding actuator can be applied as either the shift actuator or the select actuator. However, it is necessary to synchronize rotation of a synchronizer hub and rotation of an idle gear upon the shift operation, whether that be rotary or sliding movement of the sleeve. This requires relatively large driving force and high precise control. Therefore, it is preferable that the shift operation is performed by rotating the shift and select main shaft via an appropriate speed reduction ratio.

The sliding and rotating actuators can be oil pressure type actuators, respectively. As described above, when the sliding and rotating actuators are electric motors, the speed change can be easily controlled and the shift control mechanism can become compact. Each driving motor can be a direct current servo motor.

The amount of slidable movement and rotational angle of the shift and select main shaft is not be limited to a certain degree as far as the shift and select main shaft can be axially moved or rotated sufficiently depending on the select and shift operations.

An actuator according to the present invention is preferably used in a front engine front wheel drive (FF type) vehicle, a rear engine rear wheel drive (RR type) vehicle, both of which arrange an output shaft of the synchromesh-type transmission substantially in parallel with the output shaft of the vehicle driving source. In both these types of vehicle, the driving power source and the transmission are required to be mounted at a limited small space. Since the shift control mechanism according to the present invention is compact, the synchromesh-type transmission can be installed in such a limited small space. The output shaft of the vehicle driving source can be arranged to be coaxial with the crankshaft of the engine or may be offset, for example to be coaxial with the driving wheels. The mechanism according to the invention is not however limited to use in FF type vehicles and RR type vehicles. It can also be used in a front engine rear wheel drive type vehicle.

### BRIEF DESCRIPTION OF THE DRAWING FIGURES

FIG. 1 is a cross sectional view illustrating a shift control mechanism for a synchromesh-type transmission according to an embodiment of the present invention;
FIG. 2 is a side view of a casing of a synchromesh transmission for a front engine front wheel drive type vehicle, and
FIG. 3 is a schematic view illustrating a structure of a conventional shift control device.

### DETAILED DESCRIPTION OF THE INVENTION

A preferred embodiment of the present invention described with reference to FIGs. 1 and 2 which illustrate a shift control mechanism for a synchromesh-type transmission 2, FIG. 2 being the side view taken along an axis of a shift and select main shaft 30 of FIG. 1. The synchromesh-type transmission 2 is a transmission applied for a vehicle such as a front engine front wheel drive type vehicle and possesses substantially the same structure as a conventional manual transmission which performs five or six forward shift stages and a single reverse shift stage therein, as illustrated in FIG. 2. A detailed illustration of the transmission is unnecessary, and yet an outline thereof will be described below. Driving force outputted from a driving power source such as an engine or a driving motor is inputted to a clutch shaft for the transmission via a dry-type frictional clutch. The inputted driving force is transmitted to a main shaft (an output shaft) via a main drive gear, a counter shaft (an input shaft), a counter gear, an idle gear, a synchronizer ring, a sleeve, and a synchronizer hub. As described above, the driving force can be transmitted to the main shaft or to the front wheels of the vehicle via a predetermined speed reduction ratio.

The synchromesh-type transmission 2 includes three sleeves and three shift forks F1, F2 and F3 which are fixed to tip end portions of the sleeves, respectively. More particularly, the respective shift forks F1, F2 and F3 are fixed to a sleeve for changing a shift stage between a first shift stage and a second shift stage, a sleeve for changing a shift stage between a third shift stage and a fourth shift stage, and a sleeve for changing a shift stage between a fifth shift stage and a reverse shift stage. When the shift and select main shaft 30 is slidably moved, i.e. when the shift and select main shaft 30 is moved axially, any one of the shift forks F1, F2 and F3 can be selected. The selected shift fork then turns in response to rotation of the shift and select main shaft 30.

As illustrated in FIG. 2, the shift control mechanism 1 is installed in an upper portion L of the synchromesh-type transmission 2 and controls a speed change in the synchromesh-type transmission 2 via the shift and select main shaft 30. The shift control mechanism 1 is provided with a casing 50, a sliding actuator mechanism S and a rotating actuator mechanism R both of which are housed in the casing 50. The shift and select main shaft 30 is moved in the axial direction by the sliding actuator S and is rotated by the rotating actuator R. The select actuator S includes a driving motor 10 for the select operation (hereinafter referred to as a select motor 10) which corresponds to a sliding actuator motor. The rotating actuator R includes a driving motor 20 for the shift operation (hereinafter referred to as a shift motor 20) which corresponds to a rotary actuator motor. The casing 50 is fixed to a mounting face X of a housing casing of the synchromesh-type transmission 2 by means of bolts.

The shift and select main shaft 30 extends approximately vertically from the mounting face X and possesses an approximately cylindrical shaped rack 31 at a top portion thereof, a spline 32 at an approximately central portion thereof, and a lever 35 down below. The shift and select main shaft 30 is axially slidable on the spline 32 relative to a main shaft driving gear 36 which is described later. In response to the axial movement of the main shaft 30, the lever 35 of the main shaft 30 is selectively engaged with any one of gates G1, G2 and G3 of the respective shift forks F1, F2 and F3. When the main shaft 30 rotates while the lever 35 is engaged with one of the shift forks F1, F2 and F3, the engaged shift fork is also turned and the sleeve is then moved to perform the shift operation.

Next, the detailed structure of the sliding actuator S and the rotating actuator R will be explained below.

As illustrated in FIG. 1, the sliding actuator S is configured to operate with the rack 31 of the main shaft 30. A select pinion gear 12 is provided at a tip end portion of a main shaft of the select motor 10. The select pinion gear 12 is engaged with the rack 31 in response to activation of the select motor 10, wherein the shift and select main shaft 30 is moved in its axial direction.

As illustrated in FIG. 1, the rotating actuator R comprises the shift motor 20, a shift pinion gear 22, a driven gear 39, a first intermediate driving gear 38, a first intermediate driven gear 41, a second intermediate driving gear 42, and the main shaft driving gear 36. The shift pinion gear 22 is a bevel gear which is provided at a tip end portion of a main shaft of the shift motor 20. The driven gear 39 is also a bevel gear and is engaged with the shift pinion gear 22. The first intermediate driving gear 38 is formed integrally with the driven gear 39 and has fewer gear teeth than the driven gear 39. The first intermediate driving gear 38 is a spur gear having a smaller diameter than the diameter of the driven gear 39. The first intermediate driven gear 41 is also a spur gear and is engaged with the first intermediate driving gear 38. The second intermediate driving gear 42 is formed integrally with the first intermediate driven gear 41 and has fewer gear teeth than the first intermediate driven gear 41. The second intermediate driving gear 42 is a spur gear having a smaller diameter than the diameter of the first intermediate driven gear 41. The main shaft driving gear 36 is a spur gear which has greater number of teeth than the second intermediate driving gear 42 and can be engaged with the second intermediate driving gear 42. The gears 41 and 42 are supported for rotation by an intermediate shaft 40. A spline 36a is defined at an inner periphery of the main shaft driving gear 36 and engages the spline 32 such that the shift and select main shaft 30 is rotatably driven by the main shaft driving gear 36 even though it can be slidably moved in the axial direction.

According to the illustrated embodiment of the present invention, the shift and select main shaft 30 is slidably moved in the axial direction relative to the main shaft driving gear 36 in response to the rotation of the select pinion gear 12 driven by the select motor 10. When the shift pinion gear 22 is rotated by the shift motor 20, the rotating force of the shift pinion gear 22 is transmitted to the shift and select main shaft 30 via the shift pinion gear 22, the driven gear 39, the first intermediate driving gear 38, the first intermediate driven gear 41, the second intermediate driving gear 42, and the main shaft driving gear 36, wherein the shift and select main shaft 30 can be rotated via a predetermined speed reduction ratio.

According to the above-described embodiment of the present invention, the shift pinion gear 22 and the driven gear 39 are bevel gears. Therefore, the select motor 10 and the shift motor 20 can be arranged at approximately right angles relative to the shift and select main shaft 30 and in the vicinity thereof. As a result, the shift control mechanism 1 can be downsized to be compact and suitable for installation in the synchromesh-type transmission 2.

A clutch actuator (not shown) is preferably installed for connecting or disconnecting the dry-type frictional clutch for the synchromesh-type transmission 2. The select motor 10, the shift motor 20, and the clutch actuator are controlled by an electronic control unit such that a fully automatic speed change can be performed in the synchromesh-type transmission 2.

According to the above-described embodiment of the present invention, there are several intermediates gears disposed between the driven gear 39 and the main shaft driving gear 36. Alternatively, a spline connection could be provided between the inner periphery of the driven gear 39and the shift and select main shaft 30. Thus a wide variety of optimal combinations of gears can be applied in response to requisite driving force in light of sizes of a speed reduction mechanism and the shift motor.

According to the illustrated embodiment of the present invention, bevel gears are used as the shift pinion 22 and the driven gear 39. Alternatively, some other types of gears such as a hypoid gear or a worm gear can be used.

According to the illustrated embodiment of the present invention, the select operation is performed in response to the axial movement of the shift and select main shaft 30, and the shift operation is performed in response to the rotation thereof. Alternatively, the select operation can be performed in response to the rotation of the shift and select main shaft 30, and the shift operation can be performed in response to the axial movement thereof.

As described above, the shift control mechanism 1 for the synchromesh-type transmission 2 can be effectively downsized to be compact such that the shift control mechanism 1 can be more easily installed for the synchromesh-type transmission 2.

## Claims

1. A shift control mechanism for an automated manual transmission, comprising a sliding actuator (S) for controlling a sliding movement of a shift and select main shaft (30) and a rotary actuator (R) for controlling a rotary movement of the shift and select main shaft (30), wherein the rotary actuator (R) comprises a rotary actuator motor (20) and a gear train driven by the rotary actuator motor (20) and rotatably driving the shift and select main shaft (30), **characterized in that** the gear train comprises a gear (22) on an output shaft of the rotary actuator motor (20) engaging a driven gear (39) mounted substantially coaxially relative to the shift and select main shaft (30).

2. A shift control mechanism according to claim 1, wherein the gear train further comprises:
a first intermediate driving gear (38) integrally rotatable with the driven gear (39);
a first intermediate driven gear (41) supported by an intermediate shaft (40) being different from the shift and select main shaft (30) and engaged with the first intermediate driving gear (38);
a second intermediate driving gear (42) integrally rotatable with the first intermediate driven gear (41); and
a main shaft driving gear (36) disposed substantially coaxially with the shift and select main shaft (30) and engaged with the second intermediate driving gear (42) and drivingly connected to the shift and select main shaft (30) for rotation therewith.

3. A shift control mechanism according to claim 2, wherein the intermediate shaft (40) is mounted alongside and substantially parallel to the shift and select main shaft (30).

4. A shift control mechanism according to claim 2 or claim 3, wherein the first intermediate driving gear (38) has fewer teeth than the driven gear (39), and the second intermediate driving gear (42) has fewer teeth than the first intermediate driven gear (41).

5. A shift control mechanism according to claim 1, wherein the driven gear (39) is drivingly connected to the shift and select main shaft for rotation therewith.

6. A shift control mechanism according to any preceding claim, wherein the sliding actuator (S) comprises
a sliding actuator motor (10);
a pinion gear (12) on an output shaft of the sliding actuator motor (10); and
a rack (31) provided on the shift and select main shaft (30) and engaged with the pinion gear (12) for imparting sliding movement to the shift and select main shaft (30) on rotation of the pinion gear (12).

7. A shift control mechanism according to any preceding claim, wherein the gear (22) and the driven gear (39) are bevel gears, respectively.

8. A shift control mechanism according to any preceding claim, wherein the gear (22) and the driven gear (39) are hypoid gears or worm gears, respectively.
